**Europäisches Patentamt**

(19) **European Patent Office**

**Office européen des brevets**

(11) Numéro de publication: **0 187 585**
**B1**

(12) **FASCICULE DE BREVET EUROPEEN**

(45) Date de publication du fascicule du brevet:
**26.10.88**

(51) Int. Cl.⁴: **F 22 B 37/00,** G 01 B 11/24,
G 01 B 11/00

(21) Numéro de dépôt: **85402459.3**

(22) Date de dépôt: **10.12.85**

(54) **Procédé et dispositif de contrôle optique de forme et de dimensions de l'extrémité des tubes d'un générateur de vapeur.**

(30) Priorité: **14.12.84 FR 8419210**

(43) Date de publication de la demande:
**16.07.86 Bulletin 86/29**

(45) Mention de la délivrance du brevet:
**26.10.88 Bulletin 88/43**

(84) Etats contractants désignés:
**BE CH DE IT LI SE**

(56) Documents cités:
**DE - A - 3 306 449**
**FR - A - 2 398 583**

**ENGINEER, vol. 228, no. 5912, 15 mai 1969, pages 42-43, Londres, GB; H.R.F. ARNSTEIN: "Photogrammetry extends to industry"**
**FEINWERKTECHNIK & MESSTECHNIK, vol. 87, no. 5, juillet/août 1979, pages 216-220, Munich, DE; E. BARKE: "Nichtberührendes Messsystem zur räumlichen Vermessung von Werkstücken"**

(73) Titulaire: **FRAMATOME, Tour Fiat 1 place de la Coupole, F-92400 Courbevoie (FR)**

(72) Inventeur: **Martin, Alain, 113 rue Caste, F-69300 Caluire (FR)**

(74) Mandataire: **Bressand, Georges et al, c/o CABINET LAVOIX 2 Place d'Estienne d'Orves, F-75441 Paris Cedex 09 (FR)**

## Description

L'invention concerne un procédé et un dispositif de contrôle optique de forme et de dimensions de l'extrémité des tubes d'un générateur de vapeur.

Les générateurs de vapeur des réacteurs nucléaires à eau sous pression comportent un faisceau de tubes pliés en U dont les extrémités sont fixées dans une plaque tubulaire de forte épaisseur et affleurent sur l'une des faces de cette plaque tubulaire constituant la face primaire venant en contact avec l'eau sous pression. En-dessous de la plaque tubulaire, la distribution de l'eau primaire sous pression dans les tubes et la récupération de cette eau primaire se font à l'intérieur d'une boîte à eau de forme hémisphérique séparée en deux parties par une cloison verticale. Cette boîte à eau comporte une ouverture pour l'arrivée de l'eau sous pression et une ouverture pour l'évacuation de l'eau ayant circulé dans les tubes situées de part et d'autre de la cloison. Cette boîte à eau comporte également au moins un trou d'homme pour le contrôle, l'entretien et la réparation du générateur de vapeur.

Les générateurs de vapeur des réacteurs nucléaires à eau sous pression doivent fonctionner pendant de très longues périodes et il peut être nécessaire d'effectuer la réparation de certains tubes qui peuvent être fissurés après un certain temps d'utilisation dans le générateur de vapeur. Pour repérer de façon certaine les tubes fissurés il peut être nécessaire d'introduire dans ces tubes, une sonde à courant de Foucault ou à ultrasons qui demande, pour son passage dans le tube, un diamètre minimum.

Les extrémités des tubes au voisinage de la face primaire de la plaque tubulaire peuvent être déformées et repliées vers l'intérieur, sous l'effet des chocs de particules ou corps migrants transportés par l'eau sous pression pendant sa circulation à grande vitesse dans la cuve du réacteur nucléaire et dans le générateur de vapeur. Les extrémités des tubes sont en effet très légèrement saillantes par rapport à la face primaire de la plaque tubulaire et ces extrémités saillantes sont susceptibles de se déformer. Les possibilités d'introduction d'une sonde dans le tube peuvent alors être réduites.

D'autre part, il est possible soit de réparer les tubes présentant des fissures par une opération de chemisage interne, soit de mettre le tube présentant une fissure hors service, en obstruant son extrémité affleurant la plaque tubulaire grâce à un bouchon de conception spéciale.

Enfin, lorsque les opérations de réparation ou de bouchage ont été effectuées, il est nécessaire de contrôler la bonne exécution de ces opérations.

Pour ces opérations multiples de contrôle, de réparation ou de bouchage, il est nécessaire d'introduire des outillages ou éléments auxiliaires à l'intérieur du tube. Ces possibilités d'introduction d'outillages sont réduites lorsque leurs extrémités sont déformées.

Il est donc nécessaire, avant une opération de contrôle ou de réparation des tubes d'un générateur de vapeur, de connaître la forme et la dimension du trou de passage des tubes au voisinage de la face primaire de la plaque tubulaire.

Dans les générateurs de vapeur ayant fonctionné, il est peu concevable de faire cet examen de façon directe et visuelle, puisque la boîte à eau du générateur de vapeur présente une forte contamination radio-active.

Un simple examen par système vidéo n'apporterait pas des renseignements suffisamment précis et il faudrait consacrer un temps très long à l'examen optique des milliers de tubes du générateur de vapeur, à l'intérieur de la boîte à eau.

L'utilisation de clichés photographiques des différentes parties de la plaque tubulaire et des extrémités des tubes ne permettrait pas non plus de connaître de façon très précise la forme des tubes et le diamètre de passage à l'intérieur de ceux-ci.

On a déjà proposé (Feinwerktechnik & Messtechnik, vol. 87 n° 5, pages 216/220) d'utiliser des vues stéréophotogrammétriques pour contrôler la forme et la dimension d'un objet. Cependant, le procédé décrit n'est pas adapté au cas du contrôle d'un grand nombre d'objets disposés suivant un réseau régulier dans une zone non accessible pour un opérateur.

Le but de l'invention est donc de proposer un procédé de contrôle stéréophotogrammétrique de forme et de dimensions de l'extrémité des tubes d'un générateur de vapeur comportant un faisceau de tubes dont les extrémités sont fixées dans une plaque tubulaire constituant un réseau régulier dans lequel les positions des tubes sont définies de façon précise et affleurent sur l'une des faces de cette plaque tubulaire ou face primaire et une boîte à eau de forme hémisphérique comportant au moins une ouverture dans sa paroi dont le volume interne communique avec la face primaire de la plaque tubulaire et avec l'intérieur des tubes, ce procédé de contrôle permettant d'obtenir une image exacte de l'extrémité de chacun des tubes et une mesure précise de leur diamètre interne de passage, sans exposer de personnel, de façon prolongée, au rayonnement de la partie primaire des générateurs de vapeur et avec un temps d'exécution, en zone contaminée, relativement réduit.

Dans ce but:

— on déplace un appareil de prise de vues photographique muni d'un support sensible parallèlement à la plaque tubulaire, à l'intérieur de la boîte à eau, de façon que son axe optique reste sensiblement parallèle à une diction fixe, pendant le déplacement,

— on réalise successivement des prises de vues de la face primaire de la plaque tubulaire avec l'appareil photographique en des positions déterminées différentes, chaque prise de vue correspondant à une pluralité de tubes choisis de façon à obtenir, par les prises de vue successives, au moins deux vues de chacun des tubes à contrôler, sous des angles perspectifs différents,

— on réalise, à partir du support sensible extrait de la boîte à eau, des images photographiques à une échelle déterminée et fixe de la face primaire de la plaque tubulaire et des extrémités des tubes,

– on détermine, pour chacune des images, l'angle perspectif correspondant à chacun des tubes à contrôler, en mesurant l'espacement entre les tubes au voisinage du tube à contrôler et en comparant ledit espacement avec un espacement correspondant au centre de l'image, chacun des tubes étant repéré grâce à sa position dans le réseau régulier de la plaque tubulaire,

– on regroupe les images photographiques par paires susceptibles de fournir une vue stéréophotogrammétrique de l'extrémité de chacun des tubes à contrôler,

– on oriente les images de chaque paire l'une par rapport à l'autre pour obtenir une vue stéréophotogrammétrique des extrémités de chacun des tubes à contrôler,

– on détermine l'échelle de l'image en mesurant l'espacement des tubes sur la vue stéréophotogrammétrique et en comparant ledit expacement avec l'espacement des tubes dans le réseau,

– et on effectue des mesures et observations sur la vue stéréophotogrammétrique pour chacune des extrémités de tubes en tenant compte de l'échelle, en dehors de la zone du générateur de vapeur.

En outre, l'invention propose également un générateur de vapeur muni d'un dispositif de contrôle optique tel que défini dans la revendication 4.

Afin de bien faire comprendre l'invention, on va maintenant décrire, à titre d'exemple non limitatif, en se référant aux figures jointes en annexe, un mode de réalisation du procédé suivant l'invention ainsi que le dispositif utilisé pour réaliser les prises de vues à l'intérieur de la boîte à eau d'un générateur de vapeur à eau sous pression:

– la Fig. 1 est une vue en perspective éclatée de la partie inférieure d'un générateur de vapeur d'un réacteur nucléaire à eau sous pression;

– la Fig. 2 est une vue en coupe par un plan vertical d'une partie de la boîte à eau du générateur de vapeur représenté sur la Fig. 1, à l'intérieur de laquelle le dispositif de prise de vues est en position de travail;

– la Fig. 3 est une vue en perspective éclatée de l'ensemble des moyens de déplacement de l'appareil de prise de vues;

– la Fig. 4 est une vue de dessous suivant A de la Fig. 2, d'une demi-plaque tubulaire du générateur de vapeur.

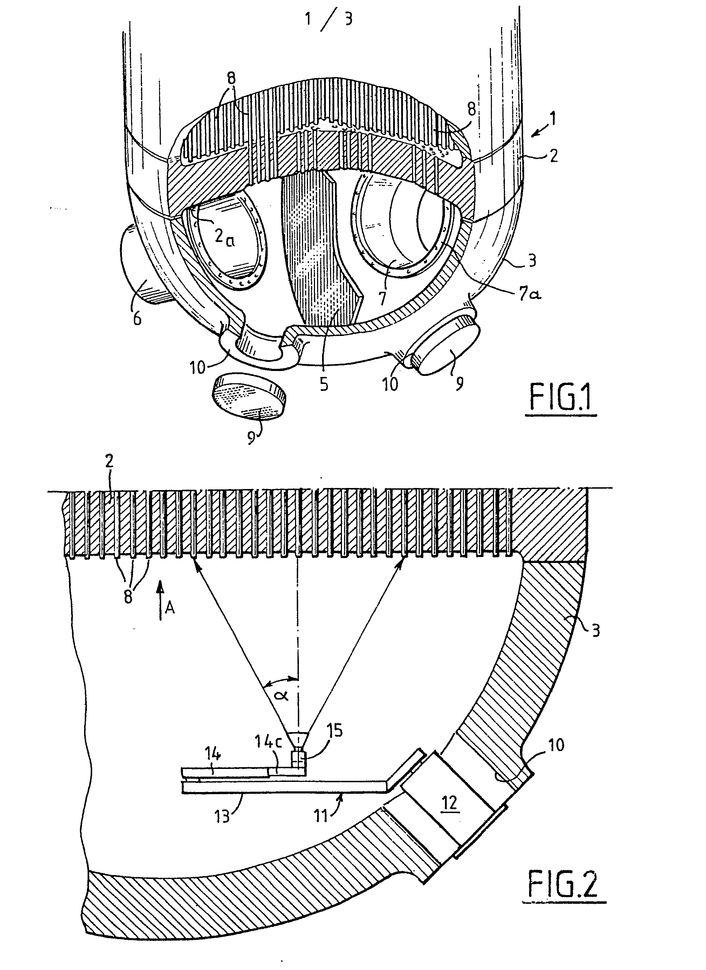

Sur la Fig. 1, on voit la partie inférieure d'un générateur de vapeur dont l'enveloppe externe 1 est reliée par l'intermédiaire de la plaque tubulaire 2 à une boîte à eau 3 de forme hémisphérique. La boîte à eau 3 est séparée en deux parties par une cloison 5 verticale.

Chacune des deux parties de la boîte à eau comporte une ouverture de grandes dimensions 7 sur laquelle est fixée une tubulure 6 permettant de relier le générateur de vapeur au circuit primaire du réacteur. A l'intérieur de la boîte à eau 3, des anneaux d'obturation 7a sont disposés autour des ouvertures 7, pour permettre la fixation d'une tape d'obturation étanche, lors de certaines opérations d'intervention dans la boîte à eau 3. L'une des tubulures 6 est reliée à la branche chaude de la boucle du circuit primaire sur laquelle se trouve le générateur de vapeur 1, c'est-à-dire la branche du circuit par laquelle arrive l'eau sous pression à haute température venant de la cuve du réacteur, cependant que l'autre tubulure 6 est reliée à la branche froide de la boucle du circuit primaire, c'est-à-dire la branche de ce circuit qui permet de renvoyer l'eau primaire refroidie dans le générateur de vapeur, dans la cuve du réacteur.

De plus, chacune des parties de la boîte à eau 3 comporte une ouverture de visite 10 ou trou d'homme fermée par une tape 9, permettant le passage d'un opérateur et/ou de matériels pour le contrôle, l'entretien ou la réparation du générateur de vapeur.

La plaque tubulaire 2 est percée de milliers de trous dans lesquels sont dudgeonnées les extrémités des tubes 8 du faisceau tubulaire occupant la partie supérieure du générateur de vapeur 1 au-dessus de la plaque 2.

Chacun des tubes 8 est plié en U à sa partie supérieure non représentée. Chaque tube du faisceau est fixé à la plaque tubulaire, par l'une de ses extrémités, d'un côté de la cloison 5 et par son autre extrémité, de l'autre côté de la cloison 5.

De cette façon, l'eau sous pression à haute température pénétrant dans la boîte à eau dans sa partie chaude, et distribuée par la plaque tubulaire dans l'ensemble des tubes du faisceau, circule sur toute la longueur de ces tubes et ressort dans la seconde partie, ou partie froide, de la boîte à eau 3.

L'eau d'alimentation du générateur de vapeur vient en contact avec la paroi extérieure des tubes dans la partie du générateur de vapeur se trouvant au-dessus de la plaque tubulaire 2. L'eau d'alimentation est échauffée et vaporisée par la chaleur de l'eau sous pression transportée par les tubes 8.

Les tubes 8 sont dudgeonnés à l'intérieur de la plaque tubulaire 2 de forte épaisseur et sont généralement très légèrement saillants par rapport à la face inférieure 2a ou face primaire venant en contact avec l'eau sous pression, du générateur de vapeur 1.

Ces extrémités des tubes 8 qui affleurent sensiblement sur la face 2a de la plaque tubulaire 2 sont soumises à des chocs de particules de petites dimensions transportées par l'eau sous pression en circulation dans la partie chaude de la boîte à eau, à très grande vitesse. Les extrémités des tubes 8 peuvent ainsi être déformées si bien que le diamètre de passage du tube peut être très inférieur à son diamètre nominal, après un certain temps de fonctionnement du générateur de vapeur.

Il est nécessaire de contrôler de façon très précise l'état des extrémités des tubes 8, en particulier dans la partie chaude de la plaque tubulaire.

Sur la Fig. 2, on voit une partie de la boîte à eau 3 d'un générateur de vapeur comportant un trou d'homme 10 à l'intérieur duquel on a introduit un dispositif de prise de vues de la plaque tubulaire désignée de façon générale par le repère 11.

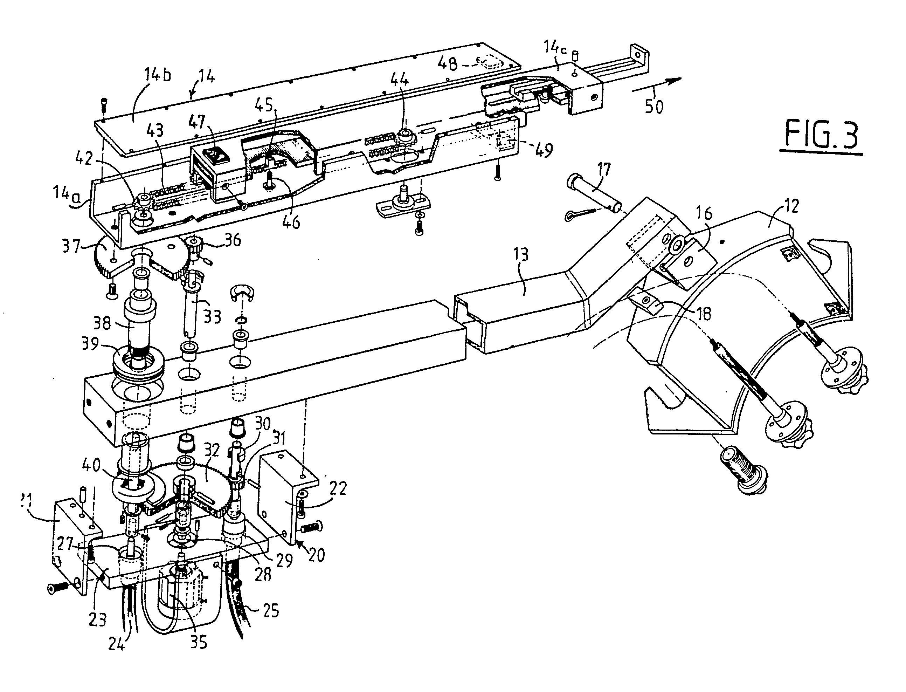

Le dispositif de prise de vues 11 qui sera décrit plus en détails en se référant à la Fig. 3 comporte une pièce de fixation 12 accrochée sur les bords du trou d'homme 10 par lequel l'appareil de prise de vues 11 pénètre dans la boîte à eau 3, un bras fixe horizontal 13 et un bras mobile 14 également horizontal portant à son extrémité l'appareil de prise de vues photographiques proprement dit désigné de façon générale par le repère 15.

L'appareil photographique 15 est un appareil à grand angulaire fixé à l'extrémité du bras 14 de façon que son axe optique soit sensiblement vertical renfermant un support sensible placé dans un plan horizontal c'est-à-dire parallèlement à la face 2a de la plaque tubulaire à contrôler.

L'appareil photographique 15 présente les qualités optiques requises pour lui permettre d'être utilisé en tant que chambre de mesure. Cet appareil permet d'obtenir des distorsions faibles et des aberrations chromatiques limitées. Sa distance focale correspondant à la distance entre son foyer et le plan de ls surface sensible est définie et connue de façon très précise; les lentilles ont un excellent alignement et les planéités et perpendicularités sont respectées avec une très bonne précision à l'intérieur de l'appareil.

La surface sensible est un film à émulsion à grains fins; on utilise par exemple des pellicules professionnelles d'une sensibilité de quatre ASA.

De tels appareils photographiques servant de chambre de mesure existent dans le commerce et la construction de l'appareil de prise de vues représenté à la Fig. 2 se réduit à la fixation d'un tel appareil photographique 15 à l'extrémité du bras mobile d'un moyen de déplacement tel qu'il sera décrit en se référant à la Fig. 3.

Préalablement à la mise en place du dispositif 11 de prise de vues à l'intérieur de la boîte à eau 3, une source lumineuse non représentée a été introduite par l'ouverture 10 dans la partie chaude de la boîte à eau 3 et mise en place de façon à éclairer l'ensemble de la face 2a de la plaque tubulaire située du côté chaud de la cloison 5.

En se reportant à la Fig. 3, on voit l'ensemble permettant le déplacement de l'appareil photographique 15 à l'intérieur de la boîte à eau 3, après son introduction par le trou d'homme 10.

La pièce de fixation 12 est réalisée sous la forme d'un étrier qui est engagé sur le bord du trou d'homme et fixé sur celui-ci tout en laissant libre le passage de ce trou d'homme 10. Sur l'étrier 12 est fixé une patte 16 en forme de U percée de façon à recevoir un axe de rotation 17 de l'extrémité du bras 13 qui peut être ainsi réglé dans la direction verticale.

Une cale 18 sur laquelle la partie du bras voisine de l'articulation vient reposer permet de régler la position de la partie courante du bras fixe 13, de façon que celle-ci soit parfaitement horizontale à l'intérieur de la boîte à eau 3. Le bras 13 est constitué de deux parties profilées à section rectangulaire reliées entre elles de façon que leurs axes fassent un certain angle.

A l'extrémité du bras fixe 13 opposée à son extrémité articulée sur la pièce de fixation 12, est vissé un ensemble moteur 20 comportant deux pattes de fixation 21 et 22 et un châssis support 23. Sur le châssis support sont fixés les moteurs d'entraînement 24 et 25 du bras mobile 14 ainsi que des paliers 27, 28 et 29 dans lesquels passent les axes des moteurs et les arbres d'entraînement des pignons du dispositif de déplacement du bras 14.

Ce dispositif comporte l'arbre de sortie 30 du moteur 23 monté tourillonnant dans le palier 29 et solidaire d'un pignon 31 engrènant avec une roue dentée de grand diamètre 32. La roue dentée 32 est elle-même solidaire d'un axe 33 monté tourillonnant dans le palier 28 et comportant une extrémité sous le support 22 pénètrant dans un dispositif capteur 35 permettant de déterminer de façon très précise l'angle de rotation de l'arbre 33. L'extrémité supérieure de l'arbre 33 est solidaire d'un pignon 36 engrènant avec une roue dentée 37 de grand diamètre fixée par des vis sur le bras mobile 14 constitué par un profilé en U 14a fermé par un couvercle plan 14b et renfermant un chariot mobile 14c constitué également par un profilé en U.

Le moteur 25 peut ainsi entraîner le bras 14 en rotation par l'intermédiaire des arbres et pignons, avec un double rapport de réduction au niveau des roues dentées 32 et 37. La position du bras 14 peut être connue de façon très précise grâce au capteur d'angle 35.

La partie supérieure de l'arbre 30 est montée tourillonnante dans le bras 13; l'arbre 33 traverse le bras 13 dans lequel il est monté tourillonant, sa partie extrême portant le pignon d'entraînement 36.

Un arbre creux 38 est monté à frottement doux par l'intermédiaire de bagues telles que 39, à l'intérieur du support 20 et du bras fixe 13. La partie supérieure de cet arbre creux 38 est silidaire du bras mobile 14.

L'arbre creux 38 est traversé sur toute sa longueur par l'arbre d'entraînement 40 solidaire de la sortie du moteur 24 portant à son extrémité supérieure un pignon à chaîne 42 engrènant avec une chaîne 43 passant sur un pignon de renvoi 44 monté tourillonnant sur la partie 14a du bras mobile 14. Un ergot 45 solidaire de la chaîne vient en prise avec une partie du chariot 14c du bras mobile 14 sur lequel il est fixé par une vis 46. Le chariot 14c est monté mobile en translation à l'intérieur de la partie profilée en U 14a du chariot mobile 14 grâce à des patins en PTFE tels que 47 assurant un mouvement guidé et avec un minimum de frottement du chariot 14c, dans la direction axiale, à l'intérieur du bras 14.

Le couvercle 14b porte également des patins en PTFE tels que 48 pour le guidage du chariot 14c.

Une butée 49 permet de limiter le mouvement de sortie du chariot 14c, dans la direction de la flèche 50, à l'extérieur du boîtier constitué par les parties 14a et 14b du bras 14. L'extrémité du chariot 14c dans le sens de sortie de ce chariot reste toujours à l'extérieur du boîtier et porte l'appareil photographique 15.

Le dispositif de déplacement du chariot 14c permet de placer l'appareil photographique dans l'une ou l'autre de deux positions correspondant pour l'une à l'extraction maximale du chariot 14c à l'extérieur du boîtier et pour l'autre à la rétraction maximum du chariot à l'intérieur du boîtier du bras mobile 14.

Ainsi, l'appareil photographique pourra occuper à l'intérieur de la boîte à eau un très grand nombre de positions correspondant aux différents angles d'orientation du bras 14 et pour chacun de ces angles d'orientation, à la position soit totalement extraite, soit totalement rétractée du chariot 14c.

Chaque position de l'appareil photographique correspondant à une position de prise de vues commandée depuis l'extérieur de la boîte à eau sera caractérisée par un angle d'orientation du bras mobile 14 et par un rayon d'extension de ce bras 14 qui peut avoir l'une ou l'autre de deux valeurs.

Le dispositif de déplacement de l'appareil photographique 15 constitué par les bras 13 et 14 permet d'assurer un déplacement de cet appareil photographique de façon que son axe optique reste constamment parallèle à une direction fixe, ce parallélisme étant assuré avec une incertitude de moins de 10°.

Après introduction du bras support dans la boîte à eau, cette opération pouvant être réalisée très rapidement et par une manipulation extrêmement simple, l'appareil photographique équipé d'un film sensible est monté à l'extrémité du bras mobile dont les mouvements sont commandés depuis l'extérieur de la boîte à eau par un opérateur qui déclenche une prise de vues dans chacune des positions du bras en rotation et en extension.

Dans le cas d'un générateur de vapeur d'un réacteur nucléaire à eau sous pression actuellement en service, on effectue ainsi successivement vingt vues photographiques de la face primaire 2a de la plaque tubulaire et de l'extrémité des tubes 8, sous des angles différents.

Les différentes positions du bras 14 qui se déplace dans un plan parfaitement horizontal sont déterminées de façon que le bras puisse prendre au moins deux vues des extrémités de chacun des tubes 8, sous des angles très différents.

Le programme de déplacement du bras 14 est ainsi prédéterminé pour effectuer un balayage de toute la plaque tubulaire avec un recouvrement suffisant.

Sur la Fig. 2, on a représenté l'appareil photographique 5 dont l'angle d'ouverture permet, dans la position représentée, la prise de vue d'un tube 8 dont le rayon perspectif fait un angle α avec l'axe optique de l'appareil photographique 15. Ce tube 8 déterminé fera l'objet d'au moins une seconde prise de vues sous un angle perspectif différent.

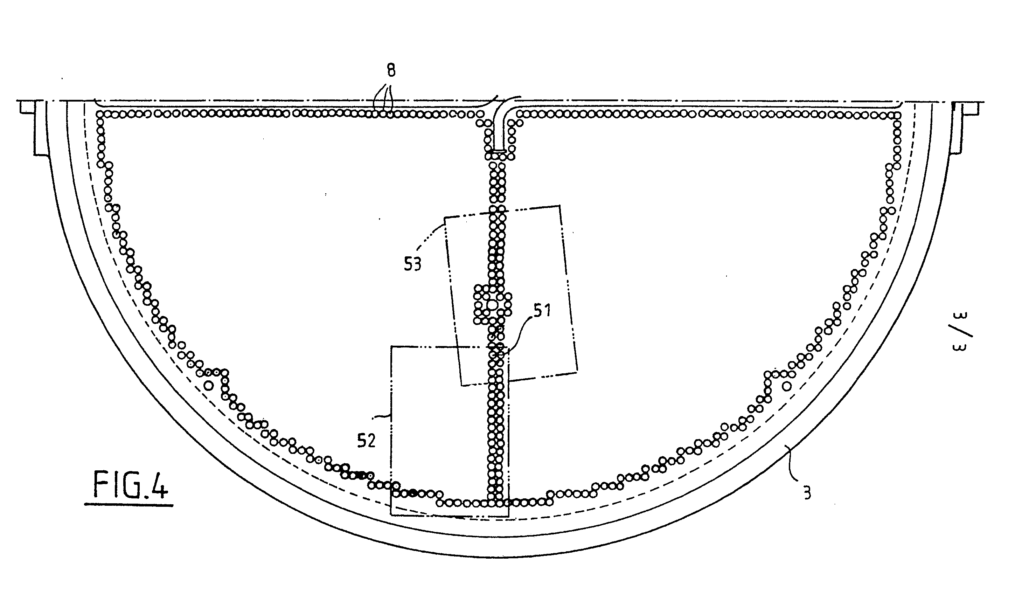

Sur la Fig. 4, on a représenté, dans le plan de la face 2a de la plaque tubulaire, la position des extrémités de tubes 8 ainsi que le contour de zones correspondant à des prises de vues différentes à l'intérieur de la boîte à eau.

L'extrémité 51 d'un tube 8 se trouve comprise à la fois dans la zone de prise de vues 52 et dans la zone de prise de vues 53.

Cette extrémité de tube 51 figurera donc sur deux vues différentes prises avec des angles de perspective également différents.

Lorsque l'ensemble des vues de la plaque tubulaire a été réalisé, on sort l'appareil photographique 15 pour récupérer son support sensible et en effectuer le développement de façon à disposer de vues photographiques de l'ensemble de la face 2a de la plaque tubulaire correspondant à des vues de zones différentes telles que 52 et 53, avec un certain recouvrement.

Le développement et le tirage de ces images photographiques sont assurés de façon que l'échelle de représentation de la plaque tubulaire et des extrémités de tubes soit parfaitement constante.

A chacune des vues photographiques correspondant à une zone de prise de vues telle que 52 ou 53 sont associés les deux paramètres (angle et rayon d'extension) déterminant de façon précise la position de l'appareil photographique au moment de la prise de vues.

Les vues photographiques peuvent être groupées deux à deux et à chacun des couples de vues photographiques correspond un ensemble de tubes dont on pourra assurer l'examen stéréophotogrammétrique.

Il est à remarquer que les tubes peuvent être parfaitement identifiés sur les vues photographiques dans la mesure où ces vues comportent pour un grand nombre d'entre elles, au moins l'un des bords de la plaque. La position particulière des tubes par rapport au bord arrondi de la plaque tubulaire permet de déterminer rapidement et sans ambiguïté la position des tubes représentés sur le cliché.

La plaque tubulaire se présente en effet comme un réseau régulier où les coordonnées et les positions des tubes sont définies à l'intérieur du réseau lui-même. De même, en prenant en considération la mesure de la distance entre les tubes se trouvant au voisinage d'un tube particulier dont on effectue l'examen stéréophotogrammétrique, on peut déterminer l'angle perspectif sous lequel est vu ce tube. La distance entre les tubes est en effet parfaitement constante dans le réseau de la plaque tubulaire et cette distance est conservée, à l'échelle près, pour les tubes voisins de la position de l'axe optique de l'appareil.

L'examen stéréophotogrammétrique proprement dit des clichés est effectué sur un dispositif connu comportant des moyens de déplacement et d'orientation relatif de ces clichés commandés à distance par un opérateur recevant les images superposées de ces deux clichés sur un écran.

Le choix des couples de clichés et leur orientation relative pour chacun des tubes peut être prédéterminé grâce à la connaissance précise de la position de l'appareil de vues pour chacun des clichés et des angles perspectifs pour chacun des tubes.

On dispose donc pour l'examen et le contrôle dimensionnel des extrémités de tubes 8, d'images photogrammétriques permettant un examen de la plaque tubulaire et de l'extrémité des tubes dans de très bonnes conditions, en dehors de la zone du générateur de vapeur.

L'image en relief obtenue par l'opérateur permet un examen direct de l'extrémité des tubes et de leurs déformations éventuelles ainsi qu'une mesure du diamètre de passage de ces tubes.

Pour effectuer les mesures, il faut simplement tenir compte de l'échelle de l'image restituée, ce qui est particulièrement facile puisqu'on dispose sur l'image de détails dont on connaît les dimensions réelles de façon très précise. On connaît par exemple les distances entre les axes des tubes qui correspondent aux distances de perçage de la plaque tubulaire.

L'exploitation des clichés pourra donc se faire pour chacun des tubes de façon visuelle et par des mesures sur l'image restituée.

Les données obtenues à partir des clichés photographiques pourront être également utilisées comme données d'entrée pour un programme de calcul permettant d'obtenir et d'afficher ou d'enregistrer les paramètres à contrôler.

On voit donc que les principaux avantages du procédé et du dispositif suivant l'invention sont de permettre de réaliser un contrôle des extrémités de tubes de la plaque tubulaire d'un générateur de vapeur ayant fonctionné sans exposer de personnel au rayonnement à l'intérieur de la boîte à eau du générateur de vapeur, d'effectuer des mesures extrêmement précises sur ces tubes sans que le temps qui peut être consacré à ces mesures soit limité et de mettre à la disposition de l'exploitant un ensemble de documents représentatifs de létat de la plaque tubulaire du générateur de vapeur à un moment donné.

## Revendications

1. Procédé de contrôle stéréophotogrammétrique de forme et de dimensions de l'extrémité des tubes d'un générateur de vapeur comportant un faisceau de tubes (8) dont les extrémités sont fixées dans une plaque tubulaire (2) constituant un réseau régulier dans lequel les positions des tubes sont définies de façon précise et affleurent sur l'une des faces de cette plaque tubulaire (2) ou face primaire (2a) et une boîte à eau (3) de forme hémisphérique comportant au moins une ouverture (10) dans sa paroi dont le volume interne communique avec la face primaire (2a) de la plaque tubulaire (2) et avec l'intérieur des tubes (8), caractérisé par le fait:

— qu'on déplace un appareil de prise de vues photographique (15) muni d'un support sensible parallèlement à la plaque tubulaire (2), à l'intérieur de la boîte à eau (3), de façon que son axe optique reste sensiblement parallèle à une direction fixe, pendant le déplacement.

— qu'on réalise successivement des prises de vues de la face primaire (2a) de la plaque tubulaire (2) avec l'appareil photographique (15) en des positions déterminées différentes, chaque prise de vue correspondant à une pluralité de tubes choisis de façon à obtenir, par les prises de vue successives, au moins deux vues de chacun des tubes (8) à contrôler, sous des angles perspectifs différents.

— qu'on réalise à partir du support sensible extrait de la boîte à eau (3) des images photographiques à une échelle déterminée et fixe de la face primaire (2a) de la plaque tubulaire (2) et des extrémités des tubes (8).

— qu'on détermine, pour chacune des images, l'angle perspectif correspondant à chacun des tubes à contrôler, en mesurant l'espacement entre les tubes au voisinage du tube à contrôler et en comparant ledit espacement avec un espacement correspondant au centre de l'image, chacun des tubes étant repéré grâce à sa position dans le réseau régulier de la plaque tubulaire.

— qu'on regroupe les images photographiques par paires susceptibles de fournir une vue stéréophotogrammétrique de l'extrémité de chacun des tubes à contrôler.

— qu'on oriente les images de chaque paire l'une par rapport à l'autre pour obtenir une vue stéréophotogrammétrique des extrémités de chacun des tubes (8) à contrôler.

— qu'on détermine l'échelle de l'image en mesurant l'espacement des tubes sur la vue stéréophotogrammétrique et en comparant ledit espacement avec l'espacement des tubes dans le réseau.

— et qu'on effectue des mesures et observations sur la vue stéréophotogrammétrique pour chacune des extrémités de tubes (8) en tenant compte de l'échelle, en dehors de la zone du générateur de vapeur.

2. Procédé de contrôle suivant la revendication 1, caractérisé par le fait que l'appareil de prises de vues photographiques (15) est déplacé dans un plan horizontal, son axe optique restant constamment vertical.

3. Procédé de contrôle suivant la revendication 2, caractérisé par le fait que l'appareil de prises de vues photographiques (15) est déplacé par rotation et par translation successives dans le plan horizontal.

4. Générateur de vapeur comprenant, à l'intérieur d'une enveloppe externe (1), un faisceau de tubes (8) dont les extrémités sont fixées dans une plaque tubulaire (2) délimitant une boîte à eau (3) dont la paroi est traversée par au moins un trou d'homme (10) et un dispositif de contrôle optique de forme et de dimension de l'extrémité des tubes (8) fixée dans la plaque tubulaire (2), caractérisé par le fait que le dispositif de contrôle comporte un ensemble de prises de vues comportant:

— une pièce de fixation (12) du dispositif dans la boîte à eau (3) du générateur de vapeur (1) fixée à l'intérieur du trou d'homme (10) de cette boîte à eau (3).

— un bras fixe (13) fixé sur la pièce (12) parallèlement à la plaque tubulaire (2) du générateur de vapeur en-dessous de celle-ci,

— un bras (14) monté mobile en rotation sur le bras (13) et comportant une partie (14c) mobile dans sa direction axiale entre une position d'extension maximum et une position rétractée,

— un appareil photographique (15) à grand angulaire dont l'axe optique est perpendiculaire à la plaque tubulaire (2) fixé à l'extrémité de la partie (14c) du bras mobile (14).

— et un ensemble de déplacement du bras (14) en rotation et de la partie (14c) de ce bras (14) en translation, commandé depuis l'extérieur de la boîte à eau (3) du générateur de vapeur, de façon à obtenir des vues judicieusement définies des extrémités d'une pluralité de tubes.

5. Générateur de vapeur suivant la revendication 4, caractérisé par le fait qu'il comporte des moyens (35) de contrôle de la position du bras mobile (14) par rapport au bras fixe (13).

## Patentansprüche

1. Verfahren zur stereophotogrammetrischen Kontrolle der Form und Abmessungen des Endes der Rohre eines Dampferzeugers, welcher ein Bündel von Rohren (8), deren Enden in einer Rohrplatte (2), welche einen regelmässigen Raster schafft, in welchem die Lagen der Rohre exakt definiert sind, befestigt und mit einer der Seiten dieser Rohrplatte (2) bzw. einer Primärseite (2a) bündig sind, und einen halbkugelförmigen wenigstens eine Öffnung (10) in seiner Wand aufweisenden Wassertank (3) umfasst, dessen Innenvolumen mit der Primärseite (2a) der Rohrplatte (2) und mit dem Inneren der Rohre (8) in Verbindung steht, dadurch gekennzeichnet, dass

— man einen mit einem empfindlichen Träger versehenen photographischen Aufnahmeapparat (15) parallel zur Rohrplatte (2) im Inneren des Wassertanks (3) verschiebt, derart, dass seine optische Achse während der Verschiebung im wesentlichen parallel zu einer festen Richtung bleibt,

— man aufeinanderfolgend Aufnahmen der Primärseite (2a) der Rohrplatte (2) mit in bestimmten verschiedenen Positionen befindlichem photographischem Aufnahmeapparat (15) macht, wobei jede Aufnahme einer Anzahl von ausgewählten Rohren derart entspricht, dass man durch die aufeinanderfolgenden Aufnahmen wenigstens zwei Ansichten eines jeden zu kontrollierenden Rohres (8) unter verschiedenen perspektivischen Winkeln erhält,

— man ausgehend von dem aus dem Wassertank (3) herausgenommenen empfindlichen Träger photographische Bilder der Primärseite (2a) der Rohrplatte (2) und der Enden der Rohre (8) mit einem bestimmten festen Massstab herstellt,

— man für jedes der Bilder den perspektivischen Winkel bestimmt, der jedem der zu kontrollierenden Rohre entspricht, indem man den Abstand zwischen den Rohren im Bereich des zu kontrollierenden Rohres misst und diesen Abstand mit einem der Mitte des Bildes entsprechenden Abstand vergleicht, wobei jedes der Rohre dank seiner Position im regelmässigen Raster der Rohrplatte lokalisiert wird,

— man die photographischen Bilder zu Paaren umgruppiert, die eine stereophotogrammetrische Ansicht des Endes eines jeden der zu kontrollierenden Rohre liefern können,

— man die Bilder eines jeden Paares bezüglich einander zur Gewinnung einer stereophotogrammetrischen Ansicht der Enden eines jeden der zu kontrollierenden Rohre (8) ausrichtet,

— man den Massstab des Bildes bestimmt, indem man den Abstand der Rohre auf der stereophotogrammetrischen Ansicht misst und diesen Abstand mit dem Abstand der Rohre im Raster vergleicht,

— und man Messungen und Beobachtungen auf der stereophotogrammetrischen Ansicht für jedes der Enden der Rohre (8) unter Berücksichtigung des Massstabs ausserhalb der Zone des Dampferzeugers durchführt.

2. Kontrollverfahren nach Anspruch 1, dadurch gekennzeichnet, dass der photographische Aufnahmeapparat (15) in einer horizontalen Ebene versetzt wird, wobei seine optische Achse dauernd vertikal bleibt.

3. Kontrollverfahren nach Anspruch 2, dadurch gekennzeichnet, dass der photographische Aufnahmeapparat (15) durch aufeinanderfolgende Rotation und Translation in der horizontalen Ebene versetzt wird.

4. Dampferzeuger, welcher im Inneren eines Aussenmantels (1) ein Bündel von Rohren (8), deren Enden in einer Rohrplatte (2) befestigt sind, welche einen Wassertank (3) begrenzt, dessen Wand von wenigstens einer Einsteigöffnung (10) durchsetzt ist, und eine Vorrichtung zur optischen Kontrolle von Form und Abmessung der in der Rohrplatte (2) befestigten Enden der Rohre (8) umfasst, dadurch gekennzeichnet, dass die Kontrollvorrichtung einen Aufnahmeaufbau aufweist, welcher

— ein Teil (12) zur Anbringung der Vorrichtung im Wassertank (3) des Dampferzeugers (1), welches innerhalb der Einsteigöffnung (10) dieses Wassertanks (3) befestigt ist,

— einen feststehenden Arm (13), welcher an dem Teil (12) parallel zur Rohrplatte (2) des Dampferzeugers unterhalb derselben befestigt ist,

— einen Arm (14), welcher drehbar an dem Arm (13) angebracht ist, und einen Teil (14c) aufweist, welcher in dessen Axialrichtung zwischen einer maximal ausgezogenen und einer eingezogenen Stellung beweglich ist,

— einen am Ende des Teils (14c) des beweglichen Arms (14) befestigten photographischen Weitwinkelapparat (15), dessen optische Achse senkrecht zur Rohrplatte (2) ist,

— und einen Aufbau zur Verlagerung des Arms (14) in Rotation und des Teils (14c) dieses Arms (14) in Translation, gesteuert von ausserhalb des Wassertanks (3) des Dampferzeugers, um so geschickt definierte Aufnahmen der Enden einer Anzahl von Rohren zu gewinnen, aufweist.

5. Dampferzeuger nach Anspruch 4, dadurch gekennzeichnet, dass er Mittel (35) zur Kontrolle der Lage des beweglichen Arms (14) bezüglich des feststehenden Arms (13) aufweist.

## Claims

1. Process for the stereophotogrammetric checking of the shape and dimensions of the ends of the tubes of a steam generator comprising a nest of tubes (8) whose ends are fixed in a tubular plate (2), which constitutes a regular network in which the positions of the tubes are precisely defined, and lie flush with one face of said tubular plate (2), or primary face (2a), and a water tank (3) of hemispherical shape having at least one opening (10) in its wall, the interior space of said tank being in communication with the primary face (2a) of the tubular plate (2) and with the interior of the tubes 8, characterized by the fact that:

— a photographic camera (15) provided with a sensitive support is placed parallel to the tubular plate (2), inside the water tank (3), in such a manner that its optical axis remains substantially parallel to a fixed direction during the displacement,

— exposures are made in succession of the primary face (2a) of the tubular plate (2) with the camera (15) in different fixed positions, each photograph corresponding to a plurality of tubes chosen so as to obtain, by successive photographs, at least two views at different perspective angles of each of the tubes (8) which have to be checked,

— with the aid of the sensitive support extracted from the water tank (3) photographic images are made on a determined fixed scale of the primary face (2a) of the tubular plate (2) and of the ends of the tubes (8),

— there is determined, for each of the images, the perspective angle corresponding to each of the tubes which have to be checked, by measuring the spacing between the tubes in the vicinity of the tube which has to be checked and by comparing the said spacing with a spacing corresponding to the centre of the image, each of the tubes being registered with reference to its position in the regular network of the tubular plate,

— the photographic images are arranged in pairs capable of providing a stereophotogrammetric view of the end of each of the tubes which have to be checked,

the images of each pair are oriented with respect to one another to obtain a stereophotogrammetric view of the ends of each of the tubes (8) which have to be checked,

— the scale of the image is determined by measuring the spacing of the tubes on the stereophotogrammetric view and by comparing the said spacing with the spacing of the tubes in the network,

— and measurements and observations are made on the stereophotogrammetric view for each of the ends of tubes (8) while taking account of the scale, outside the zone of the steam generator.

2. Checking process according to Claim 1, characterized by the fact that the camera (15) is displaced in a horizontal plane while its optical axis remains constantly vertical.

3. Checking process according to Claim 2, characterized by the fact that the camera (15) is displaced by successive rotation and translation in the horizontal plane.

4. Steam generator comprising, within an external envelope (1), a nest of tubes (8), the ends of which are fixed in a tubular plate (2) delimiting a water tank (3), through the wall of which passes at least one manhole (10) and a device for the optical checking of the shape and dimensions of the ends of the tubes (8) fixed in the tubular plate (2), characterized by the fact that the checking apparatus comprises a camera arrangement comprising:

— a fastener (12) for fastening the apparatus in the water tank (3) of the steam generator (1), which fastener is fixed inside a manhole (10) in said water tank (3),

— a fixed arm (13) fixed on the fastener (12) parallel to the tubular plate (2) of the steam generator, beneath said tubular plate,

— an arm (14) mounted for rotational movement on the arm (13) and having a part (14c) movable in its axial direction between a position of maximum extension and a retracted position,

— a camera (15) with a large angular field whose optical axis is perpendicular to the tubular plate (2) and which is fixed to the end of the part (14c) of the movable arm (14),

— and an arrangement for displacing the arm (14) in rotational movement and the part (14c) of said arm (14) in translatory movement, this arrangement being controlled from outside the water tank (3) of the steam generator so as to obtain precisely defined views of the ends of a plurality of tubes.

5. Steam generator according to Claim 4, characterized by the fact that it comprises means (35) for controlling the position of the movable arm (14) relative to the fixed arm (13).

1 / 3

FIG.1

FIG.2

FIG.3

0 187 585

2/3

13

FIG.4

0 187 585